# EUROPEAN PATENT APPLICATION

(11) **EP 4 838 307 A1**
(43) Date of publication of application: **11.11.2026**
(21) Application number: 25758029.0
(22) Date of filing: 04.02.2025
(51) Int. Cl.: G03G 15/02, F16C 13/00, G03G 15/00, G03G 15/08, G03G 15/16

(54) **ELECTROCONDUCTIVE ROLL FOR ELECTROPHOTOGRAPHIC DEVICE**

(30) Priority: 21.02.2024 JP 2024024422
(71) Applicant: Sumitomo Riko Company Limited, Komaki-shi, Aichi 485-8550 (JP)
(72) Inventor: SAITO, Yoshihiro, Komaki-shi Aichi 485-8550 (JP); HORIUCHI, Takeru, Komaki-shi Aichi 485-8550 (JP); MORITA, Akitoshi, Komaki-shi Aichi 485-8550 (JP)
(74) Representative: Müller-Boré & Partner Patentanwälte PartG mbB
(86) International application number: PCT/JP2025/003496
(87) International publication number: WO 2025/177817

(57) **Abstract**

Provided is an electroconductive roll for an electrophotographic device with which image defects due to core corrosion and bleeding out of an ion conductive agent can be suppressed. The present invention provides an electroconductive roll 10 for an electrophotographic device, said electroconductive roll 10 comprising at least a shaft body 12 made of metal, an elastic body layer 14 disposed on the outer side of the outer peripheral surface of the shaft body 12, and a surface layer 16 disposed on the outer side of the outer peripheral surface of the elastic body layer 14. The elastic body layer 14 includes: a polymer containing halogen atoms; and an ion electroconductive agent composed of one or more of a sulfonium salt, an ammonium salt, and a phosphonium salt. The electroconductive roll 10 further comprises a compound having an epoxy group and an ester group in a region extending to the inside of the elastic body layer 14 on the outer side of the outer peripheral surface of the shaft body 12.

## Description

### Technical Field

The present invention relates to a conductive roll for electrophotographic equipment that is suitably used in electrophotographic equipment such as copiers, printers, and facsimiles that employ an electrophotographic method.

### Description of Related Art

A photosensitive drum is usually built into electrophotographic equipment such as a copier, a printer, or a facsimile that uses the electrophotographic method, and provided therearound are a roll-shaped conductive member such as a charging roll, a developing roll, a transfer roll, or a toner supply roll, a dirt removing member such as a cleaning blade, and a belt-shaped conductive member such as a transfer belt or a fixing belt. Copying and printing using this type of electrophotographic equipment is carried out by forming an original image as an electrostatic latent image on a photosensitive drum, forming a toner image by attaching toner to the electrostatic latent image, and transferring the toner image onto a sheet of copy paper.

A configuration is known in which a conductive roll for electrophotographic equipment has a shaft body composed of a core metal or the like, an elastic body layer formed on the outer peripheral surface of the shaft body, and a surface layer formed on the outer peripheral surface of the elastic body layer. The conductive roll is molded by mold molding, assembly molding, or the like. In mold molding, the rubber of the elastic body layer and the core metal are brought into close contact by utilizing the shrinkage property of rubber during vulcanization. In assembly molding, hollow rubber having an inner diameter smaller than the diameter of the core metal is extruded and assembled in a subsequent process. The conductive roll may be bonded using an adhesive for the purpose of ensuring adhesion between the core metal and the rubber of the elastic body layer. For the elastic body layer of the conductive roll, hydrin rubber may be used as a rubber material for the purpose of reducing resistance. In addition, an ionic conductive agent may be used as a conductive agent.

### Related Art

### Patent Documents

Patent Document 1: Japanese Patent No. 7319907

### SUMMARY

### Technical Problem

When hydrin rubber is used for the elastic body layer of the conductive roll, chlorine atoms may be released from the hydrin rubber and react with moisture in the rubber, thereby generating hydrochloric acid. When the generated hydrochloric acid reaches pinholes on the core metal, the core metal corrodes. When the core metal corrodes, an image defect may occur due to a change in the roll shape or a change in resistance. In addition, the ionic conductive agent has a function of lowering the pH in the rubber. When an ionic conductive agent is used together with hydrin rubber for the elastic body layer of the conductive roll, the pH in the rubber is lowered, making it easier for core metal corrosion by hydrochloric acid to progress. In addition, the ionic conductive agent tends to bleed out due to polarization when energized. As a result, resistance increase may occur, and an image defect may occur.

A problem to be solved by the present invention is to provide a conductive roll for electrophotographic equipment in which an image defect caused by core metal corrosion and bleed out of an ionic conductive agent can be suppressed.

### Solution to the Problem

A conductive roll for electrophotographic equipment according to the present invention includes at least a metal shaft body and an elastic body layer disposed on an outer side of an outer peripheral surface of the shaft body, the elastic body layer includes a polymer containing a halogen atom and an ionic conductive agent composed of any one or two or more of a sulfonium salt, an ammonium salt, and a phosphonium salt, and a compound having an epoxy group and an ester group is included in a range from the outer side of the outer peripheral surface of the shaft body to an inside of the elastic body layer.

The shaft body and the elastic body layer are bonded via an adhesive layer, and one or both of the elastic body layer and the adhesive layer may include the compound having an epoxy group and an ester group. In this case, the adhesive layer may include the compound having an epoxy group and an ester group. Alternatively, the elastic body layer may include the compound having an epoxy group and an ester group. The polymer containing a halogen atom may be hydrin rubber. In the case where the adhesive layer includes the compound having an epoxy group and an ester group, a content of the compound having an epoxy group and an ester group may be 0.004 parts by mass or more and 15 parts by mass or less with respect to 100 parts by mass of a binder of the adhesive layer. In the case where the elastic body layer includes the compound having an epoxy group and an ester group, the content of the compound having an epoxy group and an ester group may be 0.004 parts by mass or more and 15 parts by mass or less with respect to 100 parts by mass of the polymer containing a halogen atom of the elastic body layer. A content of the ionic conductive agent may be 0.2 parts by mass or more and 6.5 parts by mass or less with respect to 100 parts by mass of the polymer containing a halogen atom. A weight average molecular weight Mw of the compound having an epoxy group and an ester group may be 5,000 or more and 150,000 or less. The compound having an epoxy group and an ester group may have an aromatic ring.

In the conductive roll for electrophotographic equipment according to the present invention, the shaft body and the elastic body layer may be directly bonded, and the elastic body layer may include the compound having an epoxy group and an ester group.
(1) A conductive roll for electrophotographic equipment according to the present invention includes at least a metal shaft body and an elastic body layer disposed on an outer side of an outer peripheral surface of the shaft body, the elastic body layer includes a polymer containing a halogen atom and an ionic conductive agent composed of any one or two or more of a sulfonium salt, an ammonium salt, and a phosphonium salt, and a compound having an epoxy group and an ester group is included in a range from the outer side of the outer peripheral surface of the shaft body to an inside of the elastic body layer.
(2) In the above (1), the shaft body and the elastic body layer are bonded via an adhesive layer, and one or both of the elastic body layer and the adhesive layer may include the compound having an epoxy group and an ester group.
(3) In the above (1) or the above (2), the polymer containing a halogen atom may be hydrin rubber.
(4) In the above (2), the adhesive layer may include the compound having an epoxy group and an ester group.
(5) In the above (2), the elastic body layer may include the compound having an epoxy group and an ester group.
(6) In the above (4), the content of the compound having an epoxy group and an ester group may be 0.004 parts by mass or more and 15 parts by mass or less with respect to 100 parts by mass of a binder of the adhesive layer.
(7) In the above (5), a content of the compound having an epoxy group and an ester group may be 0.004 parts by mass or more and 15 parts by mass or less with respect to 100 parts by mass of the polymer containing a halogen atom of the elastic body layer.
(8) In any one of the above (1) to (7), a content of the ionic conductive agent may be 0.2 parts by mass or more and 6.5 parts by mass or less with respect to 100 parts by mass of the polymer containing a halogen atom.
(9) In any one of the above (1) to (8), a weight average molecular weight Mw of the compound having an epoxy group and an ester group may be 5,000 or more and 150,000 or less.
(10) In any one of the above (1) to (9), the compound having an epoxy group and an ester group may have an aromatic ring.
(11) In the above (1), the shaft body and the elastic body layer may be directly bonded, and the elastic body layer may include the compound having an epoxy group and an ester group.

### Effects

The conductive roll for electrophotographic equipment according to the present invention includes at least a metal shaft body and an elastic body layer disposed on an outer side of an outer peripheral surface of the shaft body. In a case where the elastic body layer includes a polymer containing a halogen atom and an ionic conductive agent composed of one or two or more of a sulfonium salt, an ammonium salt, and a phosphonium salt, a compound having an epoxy group and an ester group is included in a range from the outer side of the outer peripheral surface of the shaft body to an inside of the elastic body layer. Since the compound having an epoxy group and an ester group captures acid derived from a halogen atom, the acid can be prevented from reaching the metal shaft body. In addition, since the compound having an epoxy group and an ester group immobilizes the ionic conductive agent, a decrease in pH caused by the ionic conductive agent is suppressed, and progression of core metal corrosion caused by acid is suppressed. As a result, core metal corrosion is suppressed, and an image defect is suppressed. Furthermore, since the compound having an epoxy group and an ester group immobilizes the ionic conductive agent, bleed out of the ionic conductive agent is suppressed, and an image defect caused thereby is suppressed.

The shaft body and the elastic body layer are bonded via an adhesive layer, and in either configuration where one or both of the elastic body layer and the adhesive layer include the compound having an epoxy group and an ester group, or configuration where the shaft body and the elastic body layer are directly bonded and the elastic body layer includes the compound having an epoxy group and an ester group, as described above, an image defect caused by core metal corrosion or bleed out of the ionic conductive agent can be suppressed.

In the case where the polymer containing a halogen atom is hydrin rubber, chlorine atoms are released from the hydrin rubber, and core metal corrosion is likely to occur. However, even in this case, core metal corrosion is suppressed, and an image defect due to core metal corrosion is suppressed.

By including the compound having an epoxy group and an ester group in the adhesive layer, acid derived from a halogen atom can be effectively captured. In addition, the ionic conductive agent can be effectively immobilized. By including the compound having an epoxy group and an ester group in the elastic body layer, acid derived from a halogen atom can be effectively captured. In addition, the ionic conductive agent can be effectively immobilized.

When the adhesive layer includes the compound having an epoxy group and an ester group, if the content of the compound having an epoxy group and an ester group is 0.004 parts by mass or more and 15 parts by mass or less with respect to 100 parts by mass of a binder of the adhesive layer, the trapping effect of acid derived from a halogen atom and the immobilization effect of the ionic conductive agent are exemplary, and the resistance increase due to the compound is easily suppressed.

When the elastic body layer includes the compound having an epoxy group and an ester group, if the content of the compound having an epoxy group and an ester group is 0.004 parts by mass or more and 15 parts by mass or less with respect to 100 parts by mass of the polymer containing a halogen atom in the elastic body layer, the trapping effect of acid derived from a halogen atom and the immobilization effect of the ionic conductive agent are exemplary, and the resistance increase due to the compound is easily suppressed.

When the content of the ionic conductive agent is 0.2 parts by mass or more and 6.5 parts by mass or less with respect to 100 parts by mass of the polymer containing a halogen atom, the effect of lowering resistance is exemplary, and bleed out of the ionic conductive agent is easily suppressed.

When the weight average molecular weight Mw of the compound having an epoxy group and an ester group is 5,000 or more and 150,000 or less, a decrease in the immobilization effect of the ionic conductive agent due to insufficient ester groups is easily suppressed, and the resistance increase due to the compound is also easily suppressed.

When the compound having an epoxy group and an ester group has an aromatic ring, a decrease in the immobilization effect of the ionic conductive agent is easily suppressed.

### BRIEF DESCRIPTION OF THE DRAWINGS

FIG. 1 is a schematic external view (a) of a conductive roll for electrophotographic equipment according to an embodiment of the present invention, and a cross-sectional view (b) taken along line A-A thereof.
FIG. 2 is a schematic external view (a) of a conductive roll for electrophotographic equipment according to another embodiment of the present invention, and a cross-sectional view (b) taken along line B-B thereof.

### DESCRIPTION OF EMBODIMENTS

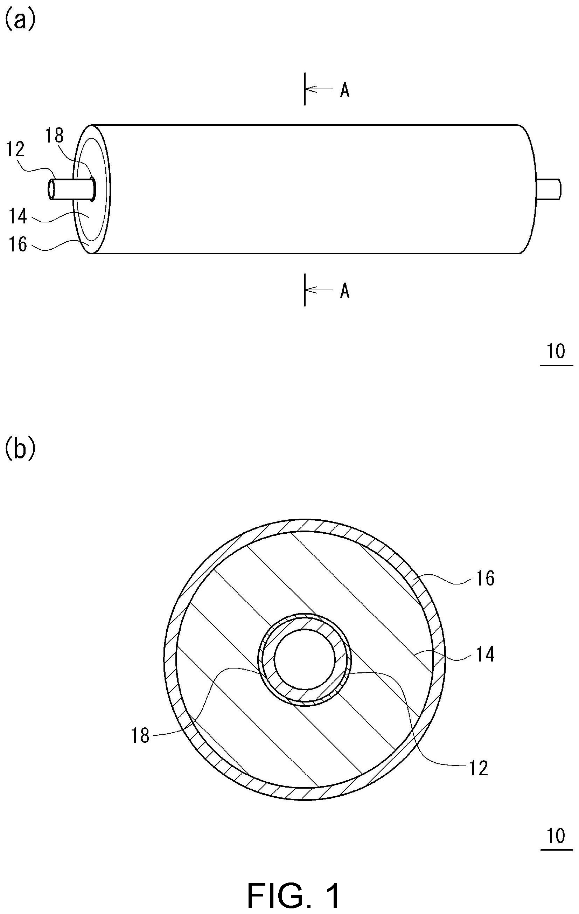

A conductive roll for electrophotographic equipment according to the present invention (hereinafter, may be simply referred to as the conductive roll) is described in detail. FIG. 1 is a schematic external view (a) of a conductive roll for electrophotographic equipment according to an embodiment of the present invention, and a cross-sectional view (b) taken along line A-A thereof. The conductive roll includes at least a metal shaft body and an elastic body layer disposed on an outer side of an outer peripheral surface of the shaft body.

A conductive roll 10 includes a shaft body 12, an adhesive layer 18 formed on the outer peripheral surface of the shaft body 12, an elastic body layer 14 formed on the outer peripheral surface of the adhesive layer 18, and a surface layer 16 formed on the outer peripheral surface of the elastic body layer 14. The elastic body layer 14 is a layer (base layer) that serves as a base of the conductive roll 10. The surface layer 16 is a layer that appears on the surface of the conductive roll 10. The adhesive layer 18 is disposed between the shaft body 12 and the elastic body layer 14, and is in contact with both. The adhesive layer 18 functions as a layer that bonds between the shaft body 12 and the elastic body layer 14. The shaft body 12 and the elastic body layer 14 are bonded via the adhesive layer 18.

The shaft body 12 generally may be any material having conductivity, and the material is not limited from this point. However, in the present invention, the shaft body 12 is composed of a metallic material. The shaft body 12 may be composed merely of a base material made of a metallic material, or may have a configuration having one layer or two or more layers of a metal layer formed by plating or the like on the surface of the base material. The metal layer in this case is formed from the viewpoint of enhancing rust resistance, enhancing adhesion to the adhesive layer 18, and the like. From the viewpoint of cost, it is preferable that the shaft body 12 is composed merely of the base material, but from the viewpoint of exemplary rust resistance, exemplary adhesion to the adhesive layer 18, and the like, a configuration in which the shaft body 12 has one layer or two or more layers of a metal layer on the surface of the base material is preferable. Examples of the metal of the base material include iron and stainless steel. From the viewpoint of cost, iron is preferable as the metal of the base material. The metal layer formed on the surface of the base material is made of a conductive metal. Examples of the metal of such a metal layer include nickel. The metal layer formed on the surface of the base material is preferably formed by plating from the viewpoints of workability and adhesion. Plating includes electroless plating and electrolytic plating, and electroless plating is preferable from the viewpoints of exemplary uniformity of film thickness and few defects such as pinholes.

Examples of the metal of the base material include iron and stainless steel. From the viewpoint of cost, iron is preferable as the metal of the base material. The metal layer formed on the surface of the base material is made of a conductive metal. Examples of the metal of such a metal layer include nickel. The metal layer formed on the surface of the base material is preferably formed by plating from the viewpoints of workability and adhesion. Plating includes electroless plating and electrolytic plating, and electroless plating is preferable from the viewpoints of exemplary uniformity of film thickness and few defects such as pinholes.

The thickness of the metal layer formed on the surface of the base material is preferably relatively thick (specifically, 10 µm or more) from the viewpoints of exemplary rust resistance and exemplary adhesion to the adhesive layer 18; however, since the cost increases accordingly, from the viewpoint of cost, the thickness is preferably 3 µm or less.

The shape of the shaft body 12 is not particularly limited as long as it is a shape that can constitute a shaft body, and may be a round bar shape made of a solid body, or may be a cylindrical shape with a hollow interior.

The adhesive layer 18 is made of an adhesive composition containing an adhesive component (binder component). Examples of the adhesive component include phenolic resin adhesive, epoxy resin adhesive, nitrile rubber adhesive, acrylic resin adhesive, polyurethane adhesive, styrene-butadiene adhesive, and natural rubber adhesive. As the adhesive component, merely one of the aforementioned may be used, or two or more of the aforementioned may be used in combination.

The adhesive component of the adhesive composition is preferably a vulcanization adhesive from the viewpoint that the adhesive component can be cured by heat or pressure during vulcanization of the elastic body layer 14 and function as the adhesive layer 18. Examples of the vulcanization adhesive include phenolic resin adhesive, epoxy resin adhesive, and nitrile rubber adhesive from the above adhesive components. Merely one of the aforementioned may be used, or two or more of the aforementioned may be used in combination.

The adhesive composition can include a conductive agent (electronic conductive agent, ionic conductive agent) for imparting conductivity as needed. In addition, one or two or more additives such as a vulcanizing agent (crosslinking agent), a vulcanization accelerator, a vulcanization aid (crosslinking aid), an extender, a reinforcing agent, a processing aid, an antioxidant, a plasticizer, an ultraviolet absorber, and a lubricant can be included.

The adhesive composition can have viscosity thereof adjusted using a solvent in consideration of applicability. Examples of the solvent include methyl ethyl ketone (MEK) and methyl isobutyl ketone (MIBK).

The thickness of the adhesive layer 18 is not particularly limited, and can be set to 1 µm or more and 100 µm or less, for example. The thickness of the adhesive layer 18 is more preferably 3 µm or more and 50 µm or less, and further preferably 5 µm or more and 10 µm or less. The volume resistivity of the adhesive layer 18 is not particularly limited, but from the viewpoint of exemplary conductivity and the like, the volume resistivity of the adhesive layer 18 is preferably within the range of 1.0×10² to 5.0×10⁵ Ω·cm.

The elastic body layer 14 is made of a conductive rubber composition including a polymer containing a halogen atom and an ionic conductive agent.

The polymer containing a halogen atom is included as a main component of the rubber component of the conductive rubber composition. The main component is 50 mass% or more, and more preferably 70 mass% or more, or 90 mass% or more. Examples of the polymer containing a halogen atom include hydrin rubber, chloroprene rubber, chlorinated butyl rubber, and chlorosulfonated polyethylene rubber. Among the aforementioned, hydrin rubber is more preferable from the viewpoint of low resistance.

Examples of hydrin rubber include epichlorohydrin homopolymer (CO), epichlorohydrin-ethylene oxide binary copolymer (ECO), epichlorohydrin-allyl glycidyl ether binary copolymer (GCO), and epichlorohydrin-ethylene oxide-allyl glycidyl ether ternary copolymer (GECO).

The ionic conductive agent is composed of any one or two or more of a sulfonium salt, an ammonium salt, and a phosphonium salt. Among the aforementioned, a sulfonium salt and an ammonium salt are more preferable from the viewpoint of thermal stability and the like.

Examples of cations of a sulfonium salt, an ammonium salt, and a phosphonium salt include those having one or two or more alkyl groups or aryl groups having about 1 to 18 carbon atoms (such as methyl group, ethyl group, propyl group, butyl group, hexyl group, octyl group, decyl group, phenyl group, and xylyl group). The alkyl group or aryl group of the cation of a sulfonium salt, an ammonium salt, and a phosphonium salt preferably has 1 to 10 carbon atoms. Examples of anions of a sulfonium salt, an ammonium salt, and a phosphonium salt include halogen ions such as F⁻, Cl⁻, Br⁻, and I⁻, ClO₄⁻, BF₄⁻, PF₆⁻, SO₄²⁻, HSO₄⁻, C₂H₅SO₄⁻, CF₃COO⁻, CF₃SO₃⁻, (CF₃SO₂)₂N⁻, (CF₃CF₂SO₂)₂N⁻, CF₃(CF₂)₃SO₃⁻, (CF₃SO₂)₃C⁻, and CF₃(CF₂)₂COO⁻. As anions of a sulfonium salt, an ammonium salt, and a phosphonium salt, ClO₄⁻, PF₆⁻, (CF₃SO₂)₂N⁻, and CF₃SO₃⁻ are more preferable.

The content of the ionic conductive agent is preferably 0.2 parts by mass or more with respect to 100 parts by mass of the polymer containing a halogen atom, from the viewpoint of exemplary effect of lowering resistance. The content of the ionic conductive agent is more preferably 0.5 parts by mass or more, and further preferably 1.0 parts by mass or more. And from the viewpoint of easily suppressing bleed out of the ionic conductive agent, the content is preferably 6.5 parts by mass or less with respect to 100 parts by mass of the polymer containing halogen atom, more preferably 6.0 parts by mass or less, and further preferably 5.0 parts by mass or less.

The conductive rubber composition can include a conductive agent (electronic conductive agent) for enhancing conductivity in addition to the rubber component. Moreover, in addition to the rubber component, one or two or more additives such as a vulcanizing agent (crosslinking agent), a vulcanization accelerator, a vulcanization aid (crosslinking aid), an extender, a reinforcing agent, a processing aid, an antioxidant, a plasticizer, an ultraviolet absorber, and a lubricant can be included.

Examples of the electronic conductive agent include carbon black, graphite, potassium titanate, iron oxide, conductive titanium oxide, conductive zinc oxide, and conductive tin oxide. Examples of the vulcanizing agent (crosslinking agent) include sulfur, peroxides, and hydrosilyl crosslinking agents. Examples of the vulcanization aid (crosslinking aid) include zinc oxide, magnesium oxide, and hydrotalcite.

The thickness of the elastic body layer 14 is not particularly limited, but is usually formed to be approximately 0.1 to 10 mm, and preferably 1 to 5 mm. From the viewpoint of exemplary conductivity and the like, the elastic body layer 14 preferably has a volume resistivity within the range of 1.0×10⁵ to 5.0×10⁸ Ω·cm. The elastic body layer 14 may be a solid non-foamed body or a foamed body such as a sponge-like body.

Here, in the conductive roll 10, it is important that a compound having an epoxy group and an ester group is included in a range from the outer side of the outer peripheral surface of the shaft body 12 to the inside of the elastic body layer 14 (that is, one or both of the elastic body layer 14 and the adhesive layer 18).

The elastic body layer 14 includes a polymer containing a halogen atom such as hydrin rubber. A halogen atom may be released from the polymer containing a halogen atom and react with moisture in the rubber, thereby generating acid derived from the halogen atom such as hydrochloric acid. The acid derived from the halogen atom becomes a factor that corrodes the metal shaft body 12. Since the epoxy group of the above compound reacts with the acid derived from the halogen atom and captures the acid derived from the halogen atom, it is probable to prevent the acid derived from the halogen atom from reaching the metal shaft body 12.

In addition, the elastic body layer 14 includes an ionic conductive agent together with a polymer containing a halogen atom from the viewpoint of low resistance. The ionic conductive agent lowers the pH in the rubber and tends to promote corrosion of the metal shaft body 12 by acid derived from the halogen atom. In addition, the ionic conductive agent tends to bleed out due to polarization when energized. The epoxy group of the above compound can bond with the cation of the ionic conductive agent and immobilize (capture) the ionic conductive agent. Moreover, the ester group of the above compound can electrostatically adsorb the cation and anion of the ionic conductive agent by the strong dipole moment of the ester group and immobilize (capture) the ionic conductive agent. This suppresses bleed out of the ionic conductive agent.

From the viewpoint of excelling in the effect of capturing acid derived from a halogen atom, in the conductive roll 10, it is more preferable that the compound having an epoxy group and an ester group is included in the adhesive layer 18, or included in both the adhesive layer 18 and the elastic body layer 14. On the other hand, from the viewpoint of excelling in the effect of immobilizing (capturing) the ionic conductive agent, in the conductive roll 10, it is more preferable that the compound having an epoxy group and an ester group is included in the elastic body layer 14, or included in both the adhesive layer 18 and the elastic body layer 14.

When the adhesive layer 18 includes a compound having an epoxy group and an ester group, the content of the compound having an epoxy group and an ester group is preferably 0.004 parts by mass or more with respect to 100 parts by mass of a binder of the adhesive layer 18, from the viewpoints of exemplary trapping effect of acid derived from a halogen atom and exemplary effect of immobilizing (trapping) the ionic conductive agent at the interface between the elastic body layer 14 and the adhesive layer 18. More preferably, the content is 0.01 parts by mass or more, and further preferably 0.1 parts by mass or more. From the viewpoint of easily suppressing resistance increase caused by the compound, the content is preferably 15 parts by mass or less with respect to 100 parts by mass of the binder of the adhesive layer 18. More preferably, the content is 10 parts by mass or less, and further preferably 5 parts by mass or less.

When the elastic body layer 14 includes a compound having an epoxy group and an ester group, the content of the compound having an epoxy group and an ester group is preferably 0.004 parts by mass or more with respect to 100 parts by mass of the polymer containing a halogen atom in the elastic body layer 14, from the viewpoints of exemplary trapping effect of acid derived from a halogen atom and exemplary effect of immobilizing (trapping) the ionic conductive agent. More preferably, the content is 0.01 parts by mass or more, and further preferably 0.1 parts by mass or more. Furthermore, from the viewpoint of easily suppressing resistance increase caused by the compound, the content is preferably 15 parts by mass or less with respect to 100 parts by mass of the polymer containing a halogen atom in the elastic body layer 14. More preferably, the content is 10 parts by mass or less, and further preferably 5 parts by mass or less.

The compound having an epoxy group and an ester group preferably has a weight average molecular weight Mw of 5,000 or more from the viewpoint of suppressing a decrease in the immobilization effect of the ionic conductive agent due to insufficient ester groups. The weight average molecular weight Mw is more preferably 7,000 or more, and further preferably 9,000 or more. On the other hand, the weight average molecular weight Mw is preferably 150,000 or less from the viewpoint of suppressing resistance increase caused by the compound. The weight average molecular weight Mw is more preferably 100,000 or less, and further preferably 50,000 or less.

The compound having an epoxy group and an ester group may have an aromatic ring. When the compound having an epoxy group and an ester group has an aromatic ring, it is effective in suppressing bleed out by utilizing steric hindrance, and a decrease in the immobilization effect of the ionic conductive agent is easily suppressed.

The material of the surface layer 16 is not particularly limited, and examples include polyamide (nylon)-based, acrylic-based, urethane-based, silicone-based, and fluorine-based polymers. These polymers may be modified. Examples of modifying groups include N-methoxymethyl groups, silicone groups, and fluorine groups.

To the surface layer 16, for imparting conductivity, conductive agents such as carbon black, graphite, conductive titanium oxide, conductive zinc oxide, conductive tin oxide, and ionic conductive agents (an ammonium salt, a phosphonium salt, a borate, a surfactant, etc.) can be appropriately added. In addition, various additives such as crosslinking agents for polymer components, leveling agents, and surface modifiers may be appropriately added as needed. Furthermore, to ensure surface roughness, roughness-forming particles may be added to the surface layer 16, but it is not needed to add roughness-forming particles.

The thickness of the surface layer 16 is not particularly limited, but is preferably in the range of 0.01 to 100 µm, more preferably in the range of 0.1 to 20 µm, and further preferably in the range of 0.3 to 10 µm. The volume resistivity of the surface layer 16 is preferably in the range of 10⁷ to 10¹² Ω·cm, more preferably in the range of 10⁸ to 10¹¹ Ω·cm, and further preferably in the range of 10⁹ to 10¹⁰ Ω·cm.

The conductive roll 10 can be manufactured by forming an adhesive layer 18 on the outer peripheral surface of a shaft body 12, forming an elastic body layer 14 on the outer peripheral surface of the adhesive layer 18, and forming a surface layer 16 on the outer peripheral surface of the elastic body layer 14.

The adhesive layer 18 can be formed by applying the adhesive composition on the outer peripheral surface of the shaft body 12, followed by performing a predetermined heat treatment. The heating temperature in the heat treatment is preferably 150 to 250°C. The heating time is preferably 30 to 60 minutes.

The elastic body layer 14 can be formed by molding the conductive rubber composition into a layer shape. The molding of the conductive rubber composition can be performed by extrusion molding or mold molding. The conductive rubber composition is crosslinked and cured by heating during extrusion molding or mold molding.

The surface layer 16 can be formed by coating the surface layer forming composition on the outer peripheral surface of the elastic body layer 14, followed by performing heat treatment as needed. From the viewpoint of adjusting viscosity, the surface layer forming composition may appropriately include a solvent such as an organic solvent including methyl ethyl ketone (MEK), toluene, acetone, ethyl acetate, butyl acetate, methyl isobutyl ketone (MIBK), THF, or DMF, or a water-soluble solvent including methanol or ethanol. As the coating method, various coating methods such as a roll coating method, a dipping method, and a spray coating method can be applied.

The conductive roll 10 having the above configuration includes a metal shaft body 12, an adhesive layer 18 formed on the outer peripheral surface of the shaft body 12, and an elastic body layer 14 formed on the outer peripheral surface of the adhesive layer 18, in which the elastic body layer 14 includes a polymer containing a halogen atom and an ionic conductive agent composed of any one or two or more of a sulfonium salt, an ammonium salt, and a phosphonium salt. In this case, one or both of the elastic body layer 14 and the adhesive layer 18, that is, a range from the outer side of the outer peripheral surface of the shaft body 12 to the inside of the elastic body layer 14, includes a compound having an epoxy group and an ester group.

The compound having an epoxy group and an ester group in the elastic body layer 14 or the adhesive layer 18 captures acid derived from a halogen atom of the polymer containing a halogen atom in the elastic body layer 14, so that the acid can be prevented from reaching the metal shaft body 12. In addition, since the compound having an epoxy group and an ester group in the elastic body layer 14 or the adhesive layer 18 immobilizes the ionic conductive agent in the elastic body layer 14, the decrease in pH caused by the ionic conductive agent is suppressed, and the progression of corrosion of the metal shaft body 12 caused by acid is suppressed. As a result, corrosion of the metal shaft body 12 is suppressed, and an image defect is suppressed. Furthermore, since the compound having an epoxy group and an ester group in the elastic body layer 14 or the adhesive layer 18 immobilizes the ionic conductive agent in the elastic body layer 14, bleed out of the ionic conductive agent is suppressed, and an image defect caused thereby is suppressed.

The conductive roll 10 described above includes a shaft body 12, an adhesive layer 18, an elastic body layer 14, and a surface layer 16 in this order; however, the conductive roll for electrophotographic equipment according to the present invention is not limited to the configuration. For example, a configuration without the adhesive layer 18 may be used.

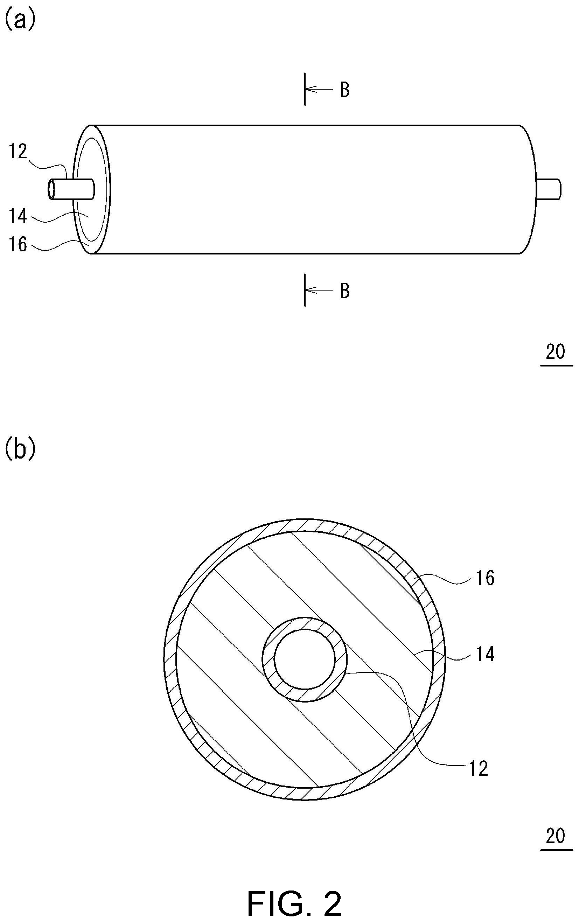

FIG. 2 is a schematic external view (a) of a conductive roll for electrophotographic equipment according to another embodiment of the present invention, and a cross-sectional view (b) taken along line B-B thereof. The conductive roll includes at least a metal shaft body and an elastic body layer disposed on an outer side of an outer peripheral surface of the shaft body.

A conductive roll 20 includes a shaft body 12, an elastic body layer 14 formed on the outer peripheral surface of the shaft body 12, and a surface layer 16 formed on the outer peripheral surface of the elastic body layer 14. The conductive roll 20 includes the shaft body 12, the elastic body layer 14, and the surface layer 16 in this order. In the conductive roll 20, the elastic body layer 14 is in contact with both the shaft body 12 and the surface layer 16. The conductive roll 20 differs from the conductive roll 10 merely in the presence or absence of the adhesive layer 18, and since other aspects are the same as those of the conductive roll 10, description of overlapping portions is omitted.

In the conductive roll 20, it is important that a compound having an epoxy group and an ester group is included in a range from the outer side of the outer peripheral surface of the shaft body 12 to the inside of the elastic body layer 14 (that is, the elastic body layer 14). The compound having an epoxy group and an ester group is as described above.

The conductive roll 20 having the above configuration includes a metal shaft body 12 and an elastic body layer 14 formed on the outer peripheral surface of the shaft body 12, in which the elastic body layer 14 includes a polymer containing a halogen atom and an ionic conductive agent composed of any one or two or more of a sulfonium salt, an ammonium salt, and a phosphonium salt. In this case, the elastic body layer 14, that is, a range from the outer side of the outer peripheral surface of the shaft body 12 to the inside of the elastic body layer 14, includes a compound having an epoxy group and an ester group.

The compound having an epoxy group and an ester group in the elastic body layer 14 captures acid derived from a halogen atom of the polymer containing a halogen atom in the elastic body layer 14, so that the acid can be prevented from reaching the metal shaft body 12. In addition, since the compound having an epoxy group and an ester group in the elastic body layer 14 immobilizes the ionic conductive agent in the elastic body layer 14, the decrease in pH caused by the ionic conductive agent is suppressed, and the progression of corrosion of the metal shaft body 12 caused by acid is suppressed. As a result, corrosion of the metal shaft body 12 is suppressed, and an image defect is suppressed. Furthermore, since the compound having an epoxy group and an ester group in the elastic body layer 14 immobilizes the ionic conductive agent in the elastic body layer 14, bleed out of the ionic conductive agent is suppressed, and an image defect caused thereby is suppressed.

The conductive roll 10 and the conductive roll 20 include the surface layer 16 on the outer periphery of the elastic body layer 14 for reasons such as protecting the surface and imparting electrical properties. However, the conductive roll for electrophotographic equipment according to the present invention is not limited to the configuration. For example, the conductive roll 10 and the conductive roll 20 may have a configuration without the surface layer 16. Instead of the surface layer 16, surface modification treatment may be applied to the surface of the elastic body layer 14. Examples of surface modification methods include a method of irradiating UV or an electron beam, and a method of contacting with a surface modifier capable of reacting with unsaturated bonds or halogens of the elastic body layer 14, for example, a compound containing reactive groups such as isocyanate groups, hydrosilyl groups, amino groups, halogen groups, and thiol groups.

The conductive roll according to the present invention can be used as a conductive roll such as a charging roll, a developing roll, a transfer roll, or a toner supply roll in electrophotographic equipment such as a copier, a printer, or a facsimile.

### Example

Hereinafter, the present invention will be described in detail using Examples and Comparative Examples.

### (Example 1)

### <Preparation of Adhesive Composition>

An adhesive composition was obtained by blending 15 parts by mass of compound <1> with 100 parts by mass of a phenolic resin adhesive ("METALOC UB" manufactured by Toyo Kagaku Kenkyusho) as a binder.

### <Preparation of Conductive Rubber Composition>

100 parts by mass of epichlorohydrin rubber (ECO) ["Hydrin T3106" manufactured by Zeon Corporation], 0.5 parts by mass of sulfur [manufactured by Tsurumi Chemical Industry Co., Ltd.] as a vulcanizing agent, 5.0 parts by mass of zinc oxide type 2 [manufactured by Mitsui Mining & Smelting Co., Ltd.] and 10.0 parts by mass of hydrotalcite [manufactured by Kyowa Chemical Industry Co., Ltd., trade name "DHT4A"] as vulcanization aids, 1.0 part by mass of vulcanization accelerator A [manufactured by Sanshin Chemical Industry Co., Ltd., trade name "Sanceler CZ"], 1.0 part by mass of vulcanization accelerator B [manufactured by Ouchi Shinko Chemical Industrial Co., Ltd., trade name "ACCEL TBT"], and 3.0 parts by mass of ionic conductive agent <1> were kneaded with a kneader to obtain a conductive rubber composition.

### <Preparation of Surface Layer Forming Composition>

A surface layer forming composition was prepared by mixing 100 parts by mass of N-methoxymethylated nylon ("EF30T" manufactured by Nagase ChemteX), 60 parts by mass of conductive tin oxide ("S-2000" manufactured by Mitsubishi Materials), 1 part by mass of citric acid, and 300 parts by mass of methanol.

### <Preparation of Conductive Roll>

The above adhesive composition was applied to the outer periphery of an iron core metal (φ6mm) with nickel plating loaded thereon and dried. Next, the core metal coated with the adhesive composition was set in a pipe-shaped mold, and the above conductive rubber composition was injected into the mold. Thereafter, the adhesive composition and the conductive rubber composition were vulcanized and cured by heating at 180°C for 30 minutes. The thickness of the adhesive layer was adjusted to 10µm, and the thickness of the elastic body layer was adjusted to 3mm. Next, a surface layer forming composition was roll-coated on the surface of the elastic body layer and heated at 120°C for 50 minutes to form a surface layer with a thickness of 10µm on the outer periphery of the elastic body layer. Thus, a conductive roll was produced.

### (Examples 2 to 4)

A conductive roll was produced in the same manner as in Example 1, except that the blending amount of compound <1> was changed in the preparation of the adhesive composition.

### (Examples 5 to 8)

A conductive roll was produced in the same manner as in Example 1, except that the type and blending amount of the compound were changed in the preparation of the adhesive composition.

### (Example 9)

A conductive roll was produced in the same manner as in Example 1, except that in the preparation of the adhesive composition, the blending amount of compound <1> was changed, and in the preparation of the conductive rubber composition, the rubber type was changed from hydrin rubber to chloroprene rubber, and the blending amount of ionic conductive agent <1> was changed.
- Chloroprene rubber [manufactured by Showa Denko "Showprene GW"]

### (Examples 10 to 11)

A conductive roll was produced in the same manner as in Example 1, except that the blending amount of compound <1> was changed in the preparation of the adhesive composition, and the type of the ionic conductive agent was changed in the preparation of the conductive rubber composition.

### (Examples 12 to 15)

A conductive roll was produced in the same manner as in Example 1, except that the blending amount of compound <1> was changed in the preparation of the adhesive composition, and the blending amount of ionic conductive agent <1> was changed in the preparation of the conductive rubber composition.

### (Example 21)

### <Preparation of Adhesive Composition>

A phenolic resin adhesive ("METALOC UB" manufactured by Toyo Kagaku Kenkyusho) was used as the adhesive composition.

### <Preparation of Conductive Rubber Composition>

100 parts by mass of epichlorohydrin rubber (ECO) ["Hydrin T3106" manufactured by Zeon Corporation], 0.5 parts by mass of sulfur [manufactured by Tsurumi Chemical Industry Co., Ltd.] as a vulcanizing agent, 5.0 parts by mass of zinc oxide type 2 [manufactured by Mitsui Mining & Smelting Co., Ltd.] and 10.0 parts by mass of hydrotalcite [manufactured by Kyowa Chemical Industry Co., Ltd., trade name "DHT4A"] as vulcanization aids, 1.0 part by mass of vulcanization accelerator A [manufactured by Sanshin Chemical Industry Co., Ltd., trade name "Sanceler CZ"], 1.0 part by mass of vulcanization accelerator B [manufactured by Ouchi Shinko Chemical Industrial Co., Ltd., trade name "ACCEL TBT"], 3.0 parts by mass of ionic conductive agent <1>, and 15 parts by mass of compound <1> were kneaded with a kneader to obtain a conductive rubber composition.

### <Preparation of Surface Layer Forming Composition>

A surface layer forming composition was prepared by mixing 100 parts by mass of N-methoxymethylated nylon ("EF30T" manufactured by Nagase ChemteX), 60 parts by mass of conductive tin oxide ("S-2000" manufactured by Mitsubishi Materials), 1 part by mass of citric acid, and 300 parts by mass of methanol.

### <Preparation of Conductive Roll>

The above adhesive composition was applied to the outer periphery of an iron core metal (φ6mm) with nickel plating loaded thereon and dried. Next, the core metal coated with the adhesive composition was set in a pipe-shaped mold, and the above conductive rubber composition was injected into the mold. Thereafter, the adhesive composition and the conductive rubber composition were vulcanized and cured by heating at 180°C for 30 minutes. The thickness of the adhesive layer was adjusted to 10µm, and the thickness of the elastic body layer was adjusted to 3mm. Next, a surface layer forming composition was roll-coated on the surface of the elastic body layer and heated at 120°C for 50 minutes to form a surface layer with a thickness of 10µm on the outer periphery of the elastic body layer. Thus, a conductive roll was produced.

### (Examples 22 to 24)

A conductive roll was produced in the same manner as in Example 21, except that the blending amount of compound <1> was changed in the preparation of the conductive rubber composition.

### (Examples 25 to 28)

A conductive roll was produced in the same manner as in Example 21, except that the type and blending amount of the compound were changed in the preparation of the conductive rubber composition.

### (Examples 29 to 32)

A conductive roll was produced in the same manner as in Examples 21 to 24, except that an elastic body layer was directly formed on the outer periphery of an iron core metal with nickel plating loaded thereon without forming an adhesive layer.

### (Comparative Example 1)

A conductive roll was produced in the same manner as in Example 1, except that the blending amount of compound <1> was changed in the preparation of the adhesive composition, and the type and blending amount of the ionic conductive agent were changed in the preparation of the conductive rubber composition.

### (Comparative Examples 2 to 3)

A conductive roll was produced in the same manner as in Example 1, except that the type and blending amount of the compound were changed in the preparation of the adhesive composition.

### (Comparative Example 4)

A conductive roll was produced in the same manner as in Example 1, except that the compound was not blended in the preparation of the adhesive composition.

The following materials were prepared as a compound having an epoxy group and an ester group and an ionic conductive agent.

### (Compound having epoxy group and ester group)

- Compound <1>: "ARUFON UG-4040" manufactured by Toagosei Co., Ltd., weight average molecular weight Mw 11,000, with aromatic ring
- Compound <2>: "MARPROOF G-1005SA" manufactured by NOF Corporation, weight average molecular weight Mw 100,000, with aromatic ring
- Compound <3>: "ARUFON UG-4070" manufactured by Toagosei Co., Ltd., weight average molecular weight Mw 9,700, with aromatic ring
- Compound <4>: "MARPROOF G-2050M" manufactured by NOF Corporation, weight average molecular weight Mw 200,000, with aromatic ring
- Compound <5>: "ARUFON UG-4010" manufactured by Toagosei Co., Ltd., weight average molecular weight Mw 2,900, without aromatic ring
- Compound <6>: "JER1256" manufactured by Mitsubishi Chemical, weight average molecular weight Mw 50,000, with aromatic ring
- Compound <7>: "ARUFON UH-2170" manufactured by Toagosei Co., Ltd., weight average molecular weight Mw 14,000, with aromatic ring

### (Ionic conductive agent)

- Ionic conductive agent <1>: sulfonium salt, "PEL-25" manufactured by Nippon Carlit (Li·ClO₄, Li·CF₃SO₃)
- Ionic conductive agent <2>: ammonium salt, "T0676" manufactured by TCI AMERICA ((CH₃)₄N·OH)
- Ionic conductive agent <3>: phosphonium salt, "H1047" manufactured by TCI AMERICA ((n-Bu)₃(CH₃(CH₂)₁₅P·Br)
- Ionic conductive agent <4>: imidazolium salt, "IL-IM1" manufactured by Koei Chemical

### (Swelling of roll surface: corrosion of core metal)

When the produced conductive roll was left standing in an environment of temperature 50°C × humidity 95% for one month, cases where no swelling occurred on the roll surface were rated as "⊚", cases where swelling occurred slightly but was within an acceptable range were rated as "∘", cases where swelling occurred at a level equivalent to the current level were rated as "△", and cases where swelling occurred at a level outside the acceptable range were rated as "×".

### (Black spot LL: discharge unevenness due to high resistance)

The produced conductive roll was incorporated as a charging roll into a multifunction printer "bizhubC658" manufactured by Konica Minolta, and after printing 2 million sheets in ruled line mode with a print density of 1% under an environment of 10°C × 10% RH, a halftone image with a print density of 25% was printed. Cases where a black spot image caused by discharge unevenness was not confirmed were rated as very good "⊚", cases where a black spot image was slight and confirmed but within an acceptable range were rated as good "∘", cases where a black spot image was equivalent to the current level was rated as "△", and cases where a black spot image was clear and confirmed were rated as poor "×".

### (Fog LL: high resistance, low capacitance, insufficient discharge)

The produced conductive roll was incorporated as a charging roll into a multifunction printer "bizhubC658" manufactured by Konica Minolta, and after printing 2 million sheets in ruled line mode with a print density of 1% under an environment of 10°C × 10% RH, a halftone image with a print density of 25% was printed. Cases where a fog image caused by insufficient discharge was not confirmed were rated as very good "⊚", cases where a fog image was slight and confirmed but within an acceptable range were rated as good "∘", cases where a fog image was equivalent to the current level were rated as "△", and cases where a fog image was clear and confirmed were rated as poor "×".

### (Bleed)

The produced conductive roll was incorporated as a charging roll into a multifunction printer "bizhubC658" manufactured by Konica Minolta, and after printing 2 million sheets in ruled line mode with a print density of 1% under an environment of 10°C × 10% RH, a halftone image with a print density of 25% was printed. Cases where bleed out caused by the ionic conductive agent was not confirmed on the conductive roll surface were rated as very good "⊚", cases where bleed out was slight and confirmed but within an acceptable range were rated as good "∘", cases where bleed out was confirmed to be equivalent to the current level were rated as "△", and cases where bleed out was clear and confirmed were rated as poor "×".

**[Table 1]**

| | | | | | | Example | | | | | | | |
|---|---|---|---|---|---|---|---|---|---|---|---|---|---|
| | | Epoxy group | Ester group | Molecular weight | Aromatic ring | 1 | 2 | 3 | 4 | 5 | 6 | 7 | 8 |
| Adhesive layer | Binder | | | | | 100 | 100 | 100 | 100 | 100 | 100 | 100 | 100 |
| | Compound <1> | Yes | Yes | 11,000 | Yes | 15 | 0.004 | 18 | 0.002 | - | - | - | - |
| | Compound <2> | Yes | Yes | 100,000 | Yes | - | - | - | - | 1 | - | - | - |
| | Compound <3> | Yes | Yes | 9,700 | Yes | - | - | - | - | - | 1 | - | - |
| | Compound <4> | Yes | Yes | 200,000 | Yes | - | - | - | - | - | - | 1 | - |
| | Compound <5> | Yes | Yes | 2,900 | No | - | - | - | - | - | - | - | 1 |
| | Compound <6> | Yes | No | 50,000 | Yes | - | - | - | - | - | - | - | - |
| | Compound <7> | No | Yes | 14,000 | Yes | - | - | - | - | - | - | - | - |
| Elastic body layer | Hydrin rubber | | | | | 100 | 100 | 100 | 100 | 100 | 100 | 100 | 100 |
| | Chloroprene rubber | | | | | - | - | - | - | - | - | - | - |
| | Ionic conductive agent <1> sulfonium | | | | | 3 | 3 | 3 | 3 | 3 | 3 | 3 | 3 |
| | Ionic conductive agent <2> ammonium | | | | | - | - | - | - | - | - | - | - |
| | Ionic conductive agent <3> phosphonium | | | | | - | - | - | - | - | - | - | - |
| | Ionic conductive agent <4> imidazolium | | | | | - | - | - | - | - | - | - | - |
| Evaluation | Swelling of roll surface | | | | | ⊚ | ○ | ⊚ | Δ | ⊚ | ⊚ | ⊚ | ⊚ |
| | Black spot (LL) | | | | | ○ | ⊚ | Δ | ⊚ | ⊚ | ⊚ | ⊚ | ⊚ |
| | Fog (LL) | | | | | ⊚ | ⊚ | ⊚ | ⊚ | ○ | ⊚ | Δ | ⊚ |
| | Bleed | | | | | ⊚ | ⊚ | ⊚ | ⊚ | ⊚ | ○ | ⊚ | Δ |

**[Table 2]**

| | | | | | | Example | | | | | | |
|---|---|---|---|---|---|---|---|---|---|---|---|---|
| | | Epoxy group | Ester group | Molecular weight | Aromatic ring | 9 | 10 | 11 | 12 | 13 | 14 | 15 |
| Adhesive layer | Binder | | | | | 100 | 100 | 100 | 100 | 100 | 100 | 100 |
| | Compound <1> | Yes | Yes | 11,000 | Yes | 1 | 1 | 1 | 1 | 1 | 1 | 1 |
| | Compound <2> | Yes | Yes | 100,000 | Yes | - | - | - | - | - | - | - |
| | Compound <3> | Yes | Yes | 9,700 | Yes | - | - | - | - | - | - | - |
| | Compound <4> | Yes | Yes | 200,000 | Yes | - | - | - | - | - | - | - |
| | Compound <5> | Yes | Yes | 2,900 | No | - | - | - | - | - | - | - |
| | Compound <6> | Yes | No | 50,000 | Yes | - | - | - | - | - | - | - |
| | Compound <7> | No | Yes | 14,000 | Yes | - | - | - | - | - | - | - |
| Elastic body layer | Hydrin rubber | | | | | - | 100 | 100 | 100 | 100 | 100 | 100 |
| | Chloroprene rubber | | | | | 100 | - | - | - | - | - | - |
| | Ionic conductive agent <1> sulfonium | | | | | 6.5 | - | - | 6.5 | 0.2 | 7.8 | 0.1 |
| | Ionic conductive agent <2> ammonium | | | | | - | 3 | - | - | - | - | - |
| | Ionic conductive agent <3> phosphonium | | | | | - | - | 3 | - | - | - | - |
| | Ionic conductive agent <4> imidazolium | | | | | - | - | - | - | - | - | - |
| Evaluation | Swelling of roll surface | | | | | ⊚ | ⊚ | ⊚ | ⊚ | ⊚ | ⊚ | ○ |
| | Black spot (LL) | | | | | ○ | ⊚ | ⊚ | ⊚ | ⊚ | ○ | ○ |
| | Fog (LL) | | | | | ○ | ⊚ | ⊚ | ⊚ | ○ | ○ | Δ |
| | Bleed | | | | | ○ | ⊚ | ⊚ | ○ | ⊚ | Δ | ⊚ |

**[Table 3]**

| | | | | | | Example | | | | | | | |
|---|---|---|---|---|---|---|---|---|---|---|---|---|---|
| | | Epoxy group | Ester group | Molecular weight | Aromatic ring | 21 | 22 | 23 | 24 | 25 | 26 | 27 | 28 |
| Adhesive layer | Binder | | | | | 100 | 100 | 100 | 100 | 100 | 100 | 100 | 100 |
| | Compound | | | | | - | - | - | - | - | - | - | - |
| | Hydrin rubber | | | | | 100 | 100 | 100 | 100 | 100 | 100 | 100 | 100 |
| | Chloroprene rubber | | | | | - | - | - | - | - | - | - | - |
| | Compound <1> | Yes | Yes | 11,000 | Yes | 15 | 0.004 | 18 | 0.002 | - | - | - | - |
| | Compound <2> | Yes | Yes | 100,000 | Yes | - | - | - | - | 1 | - | - | - |
| | Compound <3> | Yes | Yes | 9,700 | Yes | - | - | - | - | - | 1 | - | - |
| | Compound <4> | Yes | Yes | 200,000 | Yes | - | - | - | - | - | - | 1 | - |
| Elastic body layer | Compound <5> | Yes | Yes | 2,900 | No | - | - | - | - | - | - | - | 1 |
| | Compound <6> | Yes | No | 50,000 | Yes | - | - | - | - | - | - | - | - |
| | Compound <7> | No | Yes | 14,000 | Yes | - | - | - | - | - | - | - | - |
| | Ionic conductive agent <1> sulfonium | | | | | 3 | 3 | 3 | 3 | 3 | 3 | 3 | 3 |
| | Ionic conductive agent <2> ammonium | | | | | - | - | - | - | - | - | - | - |
| | Ionic conductive agent <3> phosphonium | | | | | - | - | - | - | - | - | - | - |
| | Ionic conductive agent <4> imidazolium | | | | | - | - | - | - | - | - | - | - |
| Evaluation | Swelling of roll surface | | | | | ⊚ | ○ | ⊚ | Δ | ⊚ | ⊚ | ⊚ | ⊚ |
| | Black spot (LL) | | | | | ○ | ⊚ | Δ | ⊚ | ⊚ | ⊚ | ⊚ | ⊚ |
| | Fog (LL) | | | | | ⊚ | ⊚ | ⊚ | ⊚ | ○ | ⊚ | Δ | ⊚ |
| | Bleed | | | | | ⊚ | ⊚ | ⊚ | ⊚ | ⊚ | ○ | ⊚ | Δ |

**[Table 4]**

| | | | | | | Example | | | |
|---|---|---|---|---|---|---|---|---|---|
| | | Epoxy group | Ester group | Molecular weight | Aromatic ring | 29 | 30 | 31 | 32 |
| Adhesive layer | Binder | | | | | No | No | No | No |
| | Compound | | | | | | | | |
| | Hydrin rubber | | | | | 100 | 100 | 100 | 100 |
| | Chloroprene rubber | | | | | - | - | - | - |
| | Compound <1> | Yes | Yes | 11,000 | Yes | 15 | 0.004 | 18 | 0.002 |
| | Compound <2> | Yes | Yes | 100,000 | Yes | - | - | - | - |
| | Compound <3> | Yes | Yes | 9,700 | Yes | - | - | - | - |
| Elastic body layer | Compound <4> | Yes | Yes | 200,000 | Yes | - | - | - | - |
| | Compound <5> | Yes | Yes | 2,900 | No | - | - | - | - |
| | Compound <6> | Yes | No | 50,000 | Yes | - | - | - | - |
| | Compound <7> | No | Yes | 14,000 | Yes | - | - | - | - |
| | Ionic conductive agent <1> sulfonium | | | | | 3 | 3 | 3 | 3 |
| | Ionic conductive agent <2> ammonium | | | | | - | - | - | - |
| | Ionic conductive agent <3> phosphonium | | | | | - | - | - | - |
| | Ionic conductive agent <4> imidazolium | | | | | - | - | - | - |
| Evaluation | Swelling of roll surface | | | | | ⊚ | ○ | ⊚ | Δ |
| | Black spot (LL) | | | | | ○ | ⊚ | Δ | ⊚ |
| | Fog (LL) | | | | | ⊚ | ⊚ | ⊚ | ⊚ |
| | Bleed | | | | | ⊚ | ⊚ | ⊚ | ⊚ |

**[Table 5]**

| | | | | | | Comparative Example | | | |
|---|---|---|---|---|---|---|---|---|---|
| | | Epoxy group | Ester group | Molecular weight | Aromatic ring | 1 | 2 | 3 | 4 |
| Adhesive layer | Binder | | | | | 100 | 100 | 100 | 100 |
| | Compound <1> | Yes | Yes | 11,000 | Yes | 1 | - | - | - |
| | Compound <2> | Yes | Yes | 100,000 | Yes | - | - | - | - |
| | Compound <3> | Yes | Yes | 9,700 | Yes | - | - | - | - |
| | Compound <4> | Yes | Yes | 200,000 | Yes | - | - | - | - |
| | Compound <5> | Yes | Yes | 2,900 | No | - | - | - | - |
| | Compound <6> | Yes | No | 50,000 | Yes | - | 1 | - | - |
| | Compound <7> | No | Yes | 14,000 | Yes | - | - | 1 | - |
| Elastic body layer | Hydrin rubber | | | | | 100 | 100 | 100 | 100 |
| | Chloroprene rubber | | | | | - | - | - | - |
| | Ionic conductive agent <1> sulfonium | | | | | - | 3 | 3 | 3 |
| | Ionic conductive agent <2> ammonium | | | | | - | - | - | - |
| | Ionic conductive agent <3> phosphonium | | | | | - | - | - | - |
| | Ionic conductive agent <4> imidazolium | | | | | 0.2 | - | - | - |
| Evaluation | Swelling of roll surface | | | | | × | ⊚ | × | × |
| | Black spot (LL) | | | | | ○ | ⊚ | ⊚ | ⊚ |
| | Fog (LL) | | | | | ○ | ⊚ | ⊚ | ⊚ |
| | Bleed | | | | | × | × | ○ | × |

The conductive rolls of Examples 1 to 15 have a metal shaft body, an adhesive layer, and an elastic body layer in this order, the elastic body layer includes a polymer containing a halogen atom and an ionic conductive agent of any of a sulfonium salt, an ammonium salt, and a phosphonium salt, and the adhesive layer includes a compound having an epoxy group and an ester group. The conductive rolls of Examples 21 to 28 have a metal shaft body, an adhesive layer, and an elastic body layer in this order, the elastic body layer includes a polymer containing a halogen atom and an ionic conductive agent of any of a sulfonium salt, an ammonium salt, and a phosphonium salt, and the elastic body layer includes a compound having an epoxy group and an ester group. The conductive rolls of Examples 29 to 32 have a metal shaft body and an elastic body layer in this order, the elastic body layer includes a polymer containing a halogen atom and an ionic conductive agent of any of a sulfonium salt, an ammonium salt, and a phosphonium salt, and the elastic body layer includes a compound having an epoxy group and an ester group.

That is, the conductive rolls of Examples 1 to 15 and Examples 21 to 32 include at least a metal shaft body and an elastic body layer, the elastic body layer includes a polymer containing a halogen atom and an ionic conductive agent composed of any one or two or more of a sulfonium salt, an ammonium salt, and a phosphonium salt, and a compound having an epoxy group and an ester group is included in a range from the outer side of the outer peripheral surface of the metal shaft body to the inside of the elastic body layer. According to the examples, it can be understood that swelling of the roll surface, a black spot image, fog, and bleed out of the ionic conductive agent are suppressed, and an image defect due to core metal corrosion and bleed out of the ionic conductive agent is suppressed.

In contrast, in Comparative Example 1, the ionic conductive agent of the elastic body layer is composed of an imidazolium salt, and due to the influence of steric hindrance, the compound having an epoxy group and an ester group in the adhesive layer is unable to immobilize the imidazolium salt, and core metal corrosion and bleed out of the ionic conductive agent is unable to be suppressed. In addition, in Comparative Example 2, the ionic conductive agent of the elastic body layer is of a specific type, but the compound in the adhesive layer has an epoxy group but does not have an ester group. Therefore, the ionic conductive agent is unable to be immobilized, and bleed out of the ionic conductive agent is unable to be suppressed. Moreover, in Comparative Example 3, the ionic conductive agent of the elastic body layer is of a specific type, but the compound in the adhesive layer has ester group but does not have epoxy group. Therefore, acid derived from a halogen atom is unable to be captured, and core metal corrosion is unable to be suppressed. In Comparative Example 4, a compound having an epoxy group and an ester group is not provided in a range from the outer side of the outer peripheral surface of the metal shaft body to the inside of the elastic body layer. Therefore, acid derived from a halogen atom is unable to be captured, and core metal corrosion is unable to be suppressed. In addition, the ionic conductive agent is unable to be immobilized, and bleed out of the ionic conductive agent is unable to be suppressed.

From Examples 1 to 4, it can be understood that when the content of the compound having an epoxy group and an ester group is 0.004 parts by mass or more and 15 parts by mass or less with respect to 100 parts by mass of the binder of the adhesive layer, the trapping effect of acid derived from a halogen atom is exemplary, and the resistance increase (black spot image) due to the compound is easily suppressed. Similarly, from Examples 21 to 24, it can be understood that when the content of the compound having an epoxy group and an ester group is 0.004 parts by mass or more and 15 parts by mass or less with respect to 100 parts by mass of the polymer containing a halogen atom of the elastic body layer, the trapping effect of acid derived from a halogen atom is exemplary, and the resistance increase (black spot image) due to the compound is easily suppressed.

Furthermore, from Examples 1 and 5 to 8, it can be understood that when the weight average molecular weight Mw of the compound having an epoxy group and an ester group is 5,000 or more and 150,000 or less, the decrease in the immobilization effect of the ionic conductive agent due to insufficient ester groups is easily suppressed, and the resistance increase (fog) caused by the compound is easily suppressed. Similarly, from Examples 21 and 25 to 28, it can be understood that when the weight average molecular weight Mw of the compound having an epoxy group and an ester group is 5,000 or more and 150,000 or less, the decrease in the immobilization effect of the ionic conductive agent due to insufficient ester groups is easily suppressed, and the resistance increase (fog) caused by the compound is easily suppressed.

Furthermore, from Examples 1 and 12 to 15, it can be understood that when the content of the ionic conductive agent is 0.2 parts by mass or more and 6.5 parts by mass or less with respect to 100 parts by mass of the polymer containing a halogen atom, the effect of lowering resistance (fog suppression) is exemplary, and bleed out of the ionic conductive agent due to increased amount is easily suppressed.

Although the embodiments and examples of the present invention have been described above, the present invention is not limited to the above-described embodiments and examples, and various modifications can be made without departing from the spirit of the present invention.

### Reference Signs List

10, 20 conductive roll
12 shaft body
14 elastic body layer
16 surface layer
18 adhesive layer

## Claims

1. A conductive roll for electrophotographic equipment, comprising:
at least a metal shaft body; and an elastic body layer, disposed on an outer side of an outer peripheral surface of the shaft body,
the elastic body layer comprising a polymer containing a halogen atom and an ionic conductive agent composed of any one or two or more of a sulfonium salt, an ammonium salt, and a phosphonium salt, and
a compound having an epoxy group and an ester group being comprised in a range from the outer side of the outer peripheral surface of the shaft body to an inside of the elastic body layer.

2. The conductive roll for electrophotographic equipment according to claim 1, wherein the shaft body and the elastic body layer are bonded via an adhesive layer, and one or both of the elastic body layer and the adhesive layer comprise the compound having an epoxy group and an ester group.

3. The conductive roll for electrophotographic equipment according to claim 1 or claim 2, wherein the polymer containing a halogen atom is hydrin rubber.

4. The conductive roll for electrophotographic equipment according to claim 2, wherein the adhesive layer comprises the compound having an epoxy group and an ester group.

5. The conductive roll for electrophotographic equipment according to claim 2, wherein the elastic body layer comprises the compound having an epoxy group and an ester group.

6. The conductive roll for electrophotographic equipment according to claim 4, wherein a content of the compound having an epoxy group and an ester group is 0.004 parts by mass or more and 15 parts by mass or less with respect to 100 parts by mass of a binder of the adhesive layer.

7. The conductive roll for electrophotographic equipment according to claim 5, wherein a content of the compound having an epoxy group and an ester group is 0.004 parts by mass or more and 15 parts by mass or less with respect to 100 parts by mass of the polymer containing a halogen atom of the elastic body layer.

8. The conductive roll for electrophotographic equipment according to any one of claims 1 to 7, wherein a content of the ionic conductive agent is 0.2 parts by mass or more and 6.5 parts by mass or less with respect to 100 parts by mass of the polymer containing a halogen atom.

9. The conductive roll for electrophotographic equipment according to any one of claims 1 to 8, wherein a weight average molecular weight Mw of the compound having an epoxy group and an ester group is 5,000 or more and 150,000 or less.

10. The conductive roll for electrophotographic equipment according to any one of claims 1 to 9, wherein the compound having an epoxy group and an ester group has an aromatic ring.

11. The conductive roll for electrophotographic equipment according to claim 1, wherein the shaft body and the elastic body layer are directly bonded, and the elastic body layer comprises the compound having an epoxy group and an ester group.
